# DEMANDE DE BREVET EUROPEEN

(11) **EP 1 882 864 A1**
(43) Date de publication de la demande: **30.01.2008**
(21) Numéro de dépôt: 07290859.3
(22) Date de dépôt: 09.07.2007
(51) Int. Cl.: F16D 23/14

(54) **Montage d'une butée d'embrayage comprenant une bague d'arrêt du moyen exerçant l'effort d'autocentrage**

(30) Priorité: 24.07.2006 FR 0606767
(71) Demandeur: SNR ROULEMENTS, 74000 Annecy (FR)
(72) Inventeur: Berthier, Julien, 74410 St Jorioz (FR); Bouvard, Sébastien, 74000 Annecy (FR); Ehinger, Pierre, 74210 Faverges (FR); Jabouley, Alice, 74000 Annecy (FR)
(74) Mandataire: Sayettat, Julien Christian

(57) **Abrégé**

L'invention concerne un montage d'une butée d'embrayage sur un arbre d'une boîte de vitesses d'un véhicule automobile, dans lequel ladite butée est montée sur l'arbre par l'intermédiaire d'un dispositif d'autocentrage, ledit montage intégrant un support annulaire (7) comprenant une portée axiale (7a) de montage sur l'arbre et une portée radiale (7b) en appui sur une portée correspondante (2b) d'une bague (2) de la butée, dans lequel le dispositif d'autocentrage comprend un moyen (11, 12) agencé pour pouvoir exercer un effort d'autocentrage sur la butée à l'opposé de la portée radiale (7b) du support (7) et une bague d'arrêt axial (9) dudit moyen, ladite bague étant solidarisée à la portée axiale (7a) du support (7).

## Description

Dans les applications embrayage, le diaphragme monté sur l'ensemble côté moteur et l'arbre primaire de la boîte de vitesses ne sont pas parfaitement concentriques.

Pour assurer la fonction d'autocentrage du diaphragme sur l'arbre, il est connu d'utiliser un dispositif d'autocentrage qui est apte à générer un effort d'autocentrage entre ledit arbre et la butée.

En particulier, l'invention s'applique à des montages intégrant un support annulaire comprenant une portée axiale de montage sur l'arbre et une portée radiale en appui sur une portée correspondante d'une bague de la butée.

Dans ce type de montage, il est connu de réaliser un repli radial sur l'extrémité de la portée axiale de sorte à former moyen d'arrêt axial du dispositif d'autocentrage.

Toutefois, dans cette réalisation, il se pose un problème de précision dans la position axiale du repli, ce qui induit des dispersions dans l'effort d'autocentrage conféré par le dispositif qui vient en appui sur ledit repli.

En outre, pour le montage du dispositif d'autocentrage, il est nécessaire de le pousser sur la portée axiale, ce qui induit des déformations pouvant endommager le moyen exerçant l'effort d'autocentrage. En particulier, dans le cas où le repli est formé préalablement, le passage du dispositif d'autocentrage au delà dudit repli induit des contraintes mécaniques importantes sur ledit moyen exerçant l'effort d'autocentrage.

Par conséquent, selon les réalisations de l'art antérieur, le montage du dispositif d'autocentrage peut provoquer une perte d'efficacité ou de fiabilité dans l'accomplissement de sa fonction d'autocentrage, notamment du fait de la possible plastification du moyen exerçant l'effort d'autocentrage.

L'invention a pour but de résoudre les problèmes de l'art antérieur en proposant notamment un montage d'une butée d'embrayage sur un arbre d'une boîte de vitesses d'un véhicule automobile par l'intermédiaire d'un dispositif d'autocentrage qui est positionné axialement de façon précise tout en étant de montage simplifié et moins contraignant mécaniquement.

A cet effet, l'invention propose un montage d'une butée d'embrayage sur un arbre d'une boîte de vitesses d'un véhicule automobile, dans lequel ladite butée est montée sur l'arbre par l'intermédiaire d'un dispositif d'autocentrage, ledit montage intégrant un support annulaire comprenant une portée axiale de montage sur l'arbre et une portée radiale en appui sur une portée correspondante d'une bague de la butée, dans lequel le dispositif d'autocentrage comprend un moyen agencé pour pouvoir exercer un effort d'autocentrage sur la butée à l'opposé de la portée radiale du support et une bague d'arrêt axial dudit moyen, ladite bague étant solidarisée à la portée axiale du support.

D'autres objets et avantages de l'invention apparaîtront dans la description qui suit faite en référence aux figures annexées, dans lesquelles :
- la figure 1 est une vue partielle en coupe longitudinale d'un montage selon un premier mode de réalisation de l'invention ;
- la figure 2 est une vue partielle en coupe longitudinale d'un montage selon un deuxième mode de réalisation de l'invention ;
- la figure 3 est une vue agrandie de la zone cerclée qui est représentée sur les figures 1 et 2.

En relation avec les figures, on décrit ci-dessous deux modes de réalisation d'un montage d'une butée d'embrayage sur un arbre d'une boîte de vitesses d'un véhicule automobile.

La butée comprend une bague intérieure 1 et une bague extérieure 2 réalisées en tôle emboutie et des corps roulants, typiquement des billes 3, qui sont disposés entre les bagues 1, 2 de sorte à permettre leur rotation relative.

Dans les modes de réalisation représentés, la bague extérieure 2 est solidarisée à l'arbre de la boîte de vitesses pour être fixe et la bague intérieure 1 est destinée à être actionnée par le diaphragme en rotation par rapport audit arbre. Pour ce faire, la bague intérieure 1 comprend une portée radiale 1a sur laquelle le diaphragme est destiné à venir en appui.

Toutefois, le montage selon l'invention n'est pas limité à une telle réalisation, en particulier un montage prévoyant une bague intérieure solidaire de l'arbre et une bague extérieure entraînée en rotation est également envisageable.

Par ailleurs, l'espace de roulement dans lequel sont disposées les billes 3 est étanchéifié latéralement par un joint 4 en contact frottant sur la bague intérieure 1, ledit joint étant monté sur une armature 5 solidaire de la bague extérieure 2. En outre, l'espace de roulement est étanchéifié latéralement à l'opposé du joint 4 par un déflecteur 6 solidaire de la bague extérieure 2, la géométrie dudit déflecteur étant agencée pour laisser un jeu de faible entre ledit déflecteur et la bague intérieure 1.

Le montage comprend un support annulaire 7 pourvu d'une portée axiale 7a de montage sur l'arbre et d'une portée radiale 7b en appui sur une portée correspondante 2b de la bague extérieure 2. L'appui est réalisé par l'intermédiaire d'une armature 8 du support 7 qui est interposée entre la portée radiale 2b de la bague extérieure 2 et la portée radiale 7b du support 7.

Plus précisément, dans les modes de réalisations représentés, le support 7 comprend deux portées axiales 7a, 7c respectivement formées de part et d'autre de la portée radiale 7b et donc également de part et d'autre de la portée radiale 2b de la bague extérieure 2.

Les portées axiales, respectivement avant 7a et arrière 7c, présentent un diamètre différent, et sont conformées pour recevoir un arbre de forme correspondante (non représenté). Par ailleurs, la portée arrière 7c de plus grand diamètre comprend des griffes 7d inclinées vers l'intérieur qui sont prévues pour améliorer la rétention du support 7 sur l'arbre.

Pour compenser les défauts de concentricité entre le diaphragme et l'arbre, le montage comprend en outre un dispositif d'autocentrage par l'intermédiaire duquel la butée est montée sur l'arbre. Pour ce faire, le dispositif d'autocentrage comprend un moyen agencé pour pouvoir exercer un effort d'autocentrage sur la portée radiale 2b de la bague extérieure 2 et à l'opposé de la portée radiale 7b du support 7. En particulier, le moyen est réalisée dans un matériau présentant une limite élastique au moins égale à 1000 MPa à 20°C, par exemple en acier de type XC75 trempé ou encore en Inox.

Pour assurer le positionnement axial du moyen exerçant l'effort d'autocentrage, le dispositif d'autocentrage comprend en outre une bague d'arrêt axial 9 qui est solidarisée à la portée axiale avant 7a du support 7.

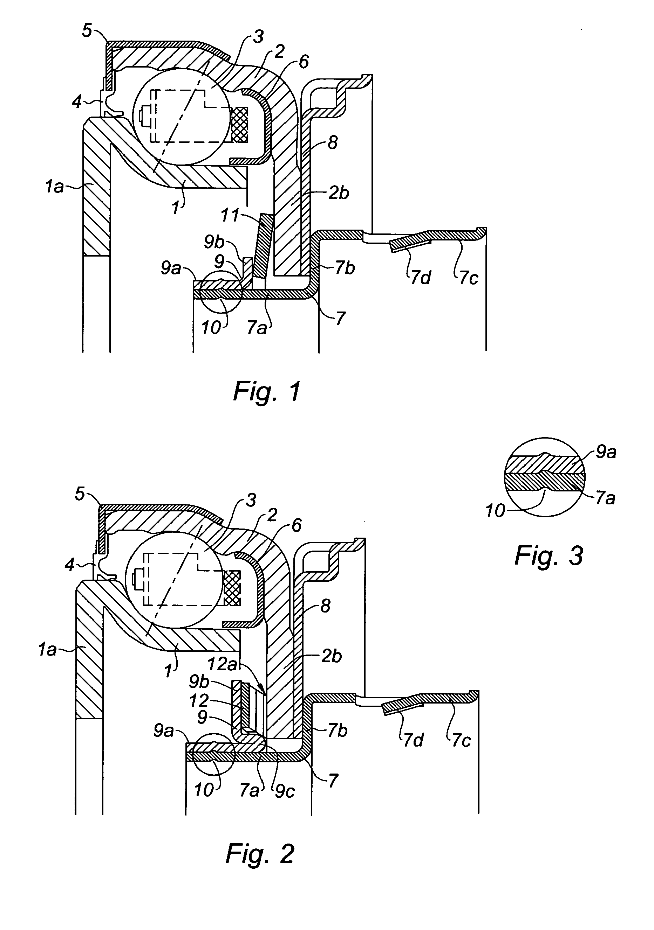

Dans les modes de réalisation représentés, la bague d'arrêt 9 comprend une portée axiale 9a d'emmanchement sur la portée axiale avant 7a du support 7. Comme il apparaît sur les figures 1 et 2, la portée axiale 7a du support 7 est dépourvue de repli radial, ce qui limite les contraintes de réalisation de l'emmanchement, notamment relativement à une éventuelle plastification du moyen exerçant l'effort d'autocentrage.

Pour améliorer la retenue axiale de la bague d'arrêt 9 sur le support 7, au moins une déformation radiale 10 est réalisée sur les portées axiales 9a, 7a respectivement de la bague d'arrêt 9 et du support 7 sur leur zone d'emmanchement (voir figure 3).

Dans un exemple de réalisation, le montage comprend trois déformations 10 qui sont équiréparties angulairement dans un plan radial. En outre, les déformations 10 représentées sont réalisées depuis l'intérieur vers l'extérieur, mais la configuration inverse pourrait être envisagée. En variante, on pourrait prévoir de réaliser une déformation sur tout ou partie de la circonférence de la zone d'emmanchement.

Les déformations 10 peuvent être réalisées par poinçonnage après emmanchement de la bague d'arrêt 9 sur le support 7. En particulier, on peut prévoir un emmanchement léger de la bague d'arrêt 9 sur le support 7 de sorte à pouvoir assurer un positionnement axial facile et précis de ladite bague sur ledit support, puis de réaliser le poinçonnage lorsque la position optimale est atteinte.

Cette réalisation permet d'assurer une précontrainte précise sur le moyen exerçant l'effort d'autocentrage sans le contraindre mécaniquement lors de son montage. En outre, un réglage de la position axiale de la bague d'arrêt 9 peut être réalisé après la disposition du moyen exerçant l'effort d'autocentrage.

En variante non représentée, on peut prévoir d'améliorer la retenue axiale de la bague d'arrêt 9 sur le support 7 par collage ou par réalisation de points de soudure.

Selon une réalisation non représentée, la bague d'arrêt 9 comprend une portée radiale qui intègre le moyen exerçant l'effort d'autocentrage. Par exemple, le moyen peut être réalisé sous la forme de saillies axiales issues de la portée radiale pour venir en appui sur la portée 2b de la bague extérieure 2.

Selon les modes de réalisation représentés, le moyen exerçant l'effort d'autocentrage est dissocié de la bague d'arrêt 9. Pour ce faire, la bague d'arrêt 9 comprend une portée radiale 9b contre laquelle ledit moyen est en appui axial vers l'arrière pour être en précontrainte vers l'avant sur la portée radiale 2b. En particulier, le moyen exerçant l'effort d'autocentrage peut être réalisé sous la forme d'une rondelle élastique.

Selon le premier mode de réalisation de la figure 1, le moyen exerçant l'effort d'autocentrage est une rondelle 11 de type Belleville qui est respectivement en appui supérieur sur la portée radiale 2b de la bague extérieure 2 et en appui inférieur sur la portée radiale 9b de la bague d'arrêt 9.

Selon le deuxième mode de réalisation de la figure 2, le moyen exerçant l'effort d'autocentrage est une rondelle 12 comprenant une couronne annulaire présentant une pluralité d'ondes axiales 12a. La rondelle 12 est disposée de sorte que les ondes 12a soient en appui sur la portée radiale 2b de la bague extérieure 2.

En particulier, la bague d'arrêt 9 comprend un repli 9c entre les portées axiale 9a et radiale 9b, la rondelle 12 étant disposée autour du repli 9c de sorte à pouvoir être centrée par rapport à la butée. Plus précisément, le repli 9c comprend une surface annulaire supérieure dont le diamètre est ajusté pour que le diamètre intérieure de la rondelle 12 vienne en appui sur elle.

En outre, la hauteur du repli 9c est supérieure ou égale au jeu radial formé entre la portée axiale 9a du support 9 et l'extrémité de la portée radiale 2b de la bague extérieure 2. Ainsi, on assure que l'effort d'autocentrage soit exercé dans un plan puisque la totalité de la surface des ondes 12a vient en appui sur la portée radiale 2b.

## Revendications

1. Montage d'une butée d'embrayage sur un arbre d'une boîte de vitesses d'un véhicule automobile, dans lequel ladite butée est montée sur l'arbre par l'intermédiaire d'un dispositif d'autocentrage, ledit montage intégrant un support annulaire (7) comprenant une portée axiale (7a) de montage sur l'arbre et une portée radiale (7b) en appui sur une portée correspondante (2b) d'une bague (2) de la butée, ledit montage étant **caractérisé en ce que** le dispositif d'autocentrage comprend un moyen (11, 12) agencé pour pouvoir exercer un effort d'autocentrage sur la butée à l'opposé de la portée radiale (7b) du support (7) et une bague d'arrêt axial (9) dudit moyen, ladite bague étant solidarisée à la portée axiale (7a) du support (7).

2. Montage selon la revendication 1, **caractérisé en ce que** la bague d'arrêt (9) comprend une portée axiale (9a) d'emmanchement sur la portée axiale (7a) du support (7).

3. Montage selon la revendication 2, **caractérisé en ce qu'**au moins une déformation radiale (10) est réalisée sur les portées axiales (9a, 7a) de la bague d'arrêt (9) et du support (7) sur leur zone d'emmanchement, ladite déformation étant agencée pour améliorer la retenue axiale de la bague d'arrêt (9) sur le support (7).

4. Montage selon la revendication 3, **caractérisé en ce qu'**il comprend trois déformations (10) qui sont équiréparties angulairement dans un plan radial.

5. Montage selon l'une quelconque des revendications 1 à 4, **caractérisé en ce que** la bague d'arrêt (9) comprend une portée radiale, ladite portée intégrant le moyen exerçant l'effort d'autocentrage.

6. Montage selon l'une quelconque des revendications 1 à 4, **caractérisé en ce que** la bague d'arrêt (9) comprend une portée radiale (9b) contre laquelle le moyen (11, 12) exerçant l'effort d'autocentrage est en appui axial.

7. Montage selon la revendication 6, **caractérisé en ce que** le moyen exerçant l'effort d'autocentrage est une rondelle (11) de type Belleville, ladite rondelle étant respectivement en appui supérieur sur la bague (2) de la butée et en appui inférieur sur la portée radiale (9b) de la bague d'arrêt (9).

8. Montage selon la revendication 6, **caractérisé en ce que** le moyen exerçant l'effort d'autocentrage est formé d'une rondelle (12) comprenant une couronne annulaire présentant une pluralité d'ondes axiales (12a), ladite rondelle étant disposée de sorte que les ondes (12a) soient en appui sur la bague (2) de la butée.

9. Montage selon la revendication 8, **caractérisé en ce que** la bague d'arrêt (9) comprend un repli (9c) entre les portées axiale (9a) et radiale (9b), ladite rondelle étant disposée autour du repli (9c) de sorte à pouvoir être centrée par rapport à la butée.

10. Montage selon la revendication 9, **caractérisé en ce que** la hauteur du repli (9c) est supérieure ou égale au jeu radial formé entre la portée axiale (7a) du support (7) et l'extrémité de la bague (2) qui est disposée en regard.
